# EUROPEAN PATENT APPLICATION

(11) **EP 4 604 493 A1**
(43) Date of publication of application: **20.08.2025**
(21) Application number: 22964802.7
(22) Date of filing: 10.11.2022
(51) Int. Cl.: H04L 67/12, H04L 61/103

(54) **NETWORK CONFIGURATION METHOD AND APPARATUS**

(71) Applicant: Shenzhen Yinwang Intelligent Technologies Co., Ltd., Shenzhen, Guangdong 518129 (CN)
(72) Inventor: LI, Xin, Shenzhen, Guangdong 518129 (CN); YAO, Zhiming, Shenzhen, Guangdong 518129 (CN); HU, Yong, Shenzhen, Guangdong 518129 (CN)
(74) Representative: Pfenning, Meinig & Partner mbB
(86) International application number: PCT/CN2022/131163
(87) International publication number: WO 2024/098332

(57) **Abstract**

This application provides a network configuration method and apparatus. The method includes: establishing a connection relationship between a plurality of network devices according to a user instruction, where the plurality of network devices are vehicle-mounted network devices; obtaining a basic configuration of each network device in the plurality of network devices, where the basic configuration of each network device includes address information of the network device; and generating network configuration information for each network device based on the connection relationship between the plurality of network devices and the basic configuration of each network device. The method in this application can be applied to a design of a communication architecture of an intelligent driving device like an intelligent vehicle or an electric vehicle, to reduce a workload of performing network configuration on the communication architecture and lower a configuration threshold for a user.

## Description

### TECHNICAL FIELD

This application relates to the field of electrical and electronic architecture designs, and in particular, to a network configuration method and apparatus.

### BACKGROUND

An electrical and electronic architecture (electrical and electronic architecture, EEA) of a vehicle is a vehicle electrical and electronic solution that integrates the electrical and electronic system principles, central electrical appliance box, connector, and electrical and electronic distribution system of the vehicle into one design. Through the design of the EEA, information about a powertrain, chassis, intelligent driving, infotainment, vehicle body, thermal management and the like may be converted into electrical and electronic solutions such as a physical layout, signal network, data network, and diagnosis that are actually allocated.

Communication between components (for example, a controller and a sensor) in the EEA, for example, receiving and sending information such as data and a control signal between the components, may be implemented by appropriately configuring a communication architecture in the EEA. However, the EEA relates to one or more types of network interfaces, and a network relationship between one or more types of sensors and an electronic control unit (electronic control unit, ECU). The one or more types of sensors and the ECU are interconnected over a plurality of communication protocols, which leads to complex and various network relationships. Consequently, during configuration of the communication architecture, a developer is troubled by the following problems such as high planning difficulty, a heavy configuration workload, and proneness to configuration errors.

In view of this, a network configuration solution needs to be developed urgently to reduce a configuration workload and lower a configuration threshold for a user.

### SUMMARY

This application provides a network configuration method and apparatus, to reduce a configuration workload and lower a configuration threshold for a user.

According to a first aspect, a network configuration method is provided. The method includes: establishing a connection relationship between a plurality of network devices according to a user instruction, where the plurality of network devices are vehicle-mounted network devices; obtaining a basic configuration of each network device in the plurality of network devices, where the basic configuration of each network device includes address information of the network device; and generating network configuration information for each network device based on the connection relationship between the plurality of network devices and the basic configuration of each network device.

**In** the foregoing technical solution, the network configuration information can be generated for the vehicle-mounted network device based on the connection relationship between the vehicle-mounted network devices that is designed by a user and the basic configuration of each vehicle-mounted network setting. A process of generating a network configuration table is invisible to the user. This reduces understanding and learning costs of the user, simplifies network configuration complexity, and helps reduce a planning and configuration threshold of an EEA communication architecture. In addition, generation and configuration of the network configuration information are completed in a development and design phase, and configuration does not need to be performed by using a self-learning method in an actual running process of the vehicle-mounted network device. Therefore, requirements of the field of in-vehicle networks on high reliability and high security of a network can be met.

For example, the vehicle-mounted network device may correspond to an ECU and/or a sensor in an intelligent driving device.

For example, the connection relationship between the plurality of network devices may indicate an EEA of the intelligent driving device.

With reference to the first aspect, in some implementations of the first aspect, the method further includes: controlling a display apparatus to display a first interface, where the first interface includes the connection relationship between the plurality of network devices.

In some possible implementations, the display apparatus may be a display on which an apparatus for performing the foregoing method is deployed, or may be another display apparatus associated with an apparatus for performing the foregoing method.

In the foregoing technical solution, in a process of configuring the EEA communication architecture, the connection relationship (or referred to as a topology structure) between the network devices in the EEA can be displayed for the user. The topology structure of the EEA is intuitively displayed to the user, so that the user can understand a design intent of the EEA. This can reduce learning and use costs of the user. In addition, this can further reduce time for the user to communicate with a network architect in the configuration process, reduce a subsequent configuration and debugging workload, and greatly reduce development costs.

With reference to the first aspect, in some implementations of the first aspect, the first interface includes a display area and a creation tool area. The creation tool area includes a plurality of network device objects of different types. The plurality of network device objects of different types are used to create the plurality of network devices. The display area is used to display the connection relationship between the plurality of network devices.

In some possible implementations, the network device created by using the network device object has a communication port. The communication port is configured to communicate with another network device.

In the foregoing technical solution, a tool for creating the EEA communication architecture is provided for the user, to further provide convenience for the user to complete network configuration.

With reference to the first aspect, in some implementations of the first aspect, the connection relationship between the plurality of network devices includes a type of a communication port of each network device in the plurality of network devices. The communication port is a port connected to another network device.

In some possible implementations, the creation tool area further includes a communication port object and a hardware connection relationship object. The communication port object is used to create the communication port on the network device. The hardware connection relationship object is used to create a connection relationship between communication ports.

In the foregoing technical solution, a tool for creating the communication port is provided for the user. When developing and designing the EEA, the user can flexibly modify the communication port on each vehicle-mounted network device.

With reference to the first aspect, in some implementations of the first aspect, the type of the communication port includes an ethernet (Ethernet, ETH) port, a universal asynchronous receiver/transmitter (universal asynchronous receiver/transmitter, UART) port, a low-voltage differential signaling (low-voltage differential signaling, LVDS) port, or a controller area network (controller area network, CAN) port.

With reference to the first aspect, in some implementations of the first aspect, the generating network configuration information for each network device based on the connection relationship between the plurality of network devices and the basic configuration of each network device includes: determining a communication relationship between the plurality of network devices based on the type of the communication port of each network device in the plurality of network devices and the basic configuration of each network device; and generating the network configuration information for each network device based on the communication relationship between the plurality of network devices.

In some possible implementations, the type of the communication port may be the ethernet port. The ethernet port may be an ETH port or a switch port. The ETH port is configured to serve as a source port or a destination port for ethernet communication. The switch port is configured to forward ethernet packets. When the type of the communication port is the ethernet port, the communication relationship between the plurality of network devices may be determined based on virtual local area network identifiers (virtual local area network identifiers, VLAN IDs) of the network devices.

With reference to the first aspect, in some implementations of the first aspect, the basic configuration of each network device further includes a VLAN ID of the network device. The determining a communication relationship between the plurality of network devices based on the type of the communication port of each network device in the plurality of network devices and the basic configuration of each network device includes: determining the communication relationship between the plurality of network devices based on the type of the communication port of each network device in the plurality of network devices and the VLAN ID of each network device.

For example, one network device may include one or more ethernet subdevices. The determining the communication relationship between the plurality of network devices based on the type of the communication port of each network device in the plurality of network devices and the VLAN ID of each network device may include: determining one or more network device sets based on a VLAN ID of each ethernet subdevice in each network device, where ethernet subdevices in one network device set are located in one broadcast domain. For example, the network device set represents a communication relationship.

The ethernet subdevice is a device that is in the network device and that is configured to process the ethernet packet. For example, the ethernet subdevice may include an ETH device and/or a virtual ETH device. The ETH device is a device that has a physical connection relationship with an external device or communication port. The virtual ETH device is a virtual sub network interface card device abstracted from the ETH device.

It should be noted that a "connection relationship" in this application includes a physical connection relationship between two network devices that is created by using the hardware connection relationship object, and a "communication relationship" in this application includes a relationship in which two network devices communicate with each other through an ethernet. It may be understood that there is not necessarily a communication relationship between two network devices that have a connection relationship.

With reference to the first aspect, in some implementations of the first aspect, the obtaining a basic configuration of each network device in the plurality of network devices includes: in response to an operation on a first network device, controlling the display apparatus to display a second interface, and obtaining a basic configuration of the first network device via the second interface, where the first network device is any one of the plurality of network devices.

For example, the operation on the first network device in the plurality of network devices may be an operation of tapping the first network device on a display interface (for example, the first interface), may be an operation of tapping a communication port of the first network device on a display interface (for example, the first interface), or may be another operation.

In the foregoing technical solution, an interface for configuring the basic configuration of each network device is provided for the user based on the connection relationship between the plurality of network devices that is displayed to the user. In this way, the user can input the basic configuration when understanding the connection relationship between the network devices. This can reduce a workload and difficulty for performing network configuration by EEA development and design personnel.

With reference to the first aspect, in some implementations of the first aspect, the basic configuration of each network device further includes a data stream configuration. The data stream configuration indicates a constraint on a data stream generated when the network device provides a service. The constraint on the data stream includes one or more of a flow direction of the data stream, a transmission speed of the data stream, and a priority of the data stream. The method further includes: controlling the display apparatus to display a third interface, where the third interface includes one or more of a flow direction of a data stream between the plurality of network devices, a transmission speed of the data stream, and a priority of the data stream.

In the foregoing technical solution, the third interface is used to display the one or more of the flow direction of the data stream between the plurality of network devices, the transmission speed of the data stream, and the priority of the data stream. In this way, the user can intuitively understand a communication process between the plurality of network devices, to determine a network configuration effect. In addition, this helps the user understand an EEA model including the plurality of network devices.

With reference to the first aspect, in some implementations of the first aspect, the network configuration information includes one or more of an access control list (access control list, ACL), an address resolution list (address resolution list, ARL), an address resolution protocol (address resolution protocol, ARP), and a routing table.

According to a second aspect, a network configuration apparatus is provided. The apparatus includes a first processing unit, an obtaining unit, and a generation unit. The first processing unit is configured to establish a connection relationship between a plurality of network devices according to a user instruction, where the plurality of network devices are vehicle-mounted network devices. The obtaining unit is configured to obtain a basic configuration of each network device in the plurality of network devices, where the basic configuration of each network device includes address information of the network device. The generation unit is configured to generate network configuration information for each network device based on the connection relationship between the plurality of network devices and the basic configuration of each network device.

With reference to the second aspect, in some implementations of the second aspect, the apparatus further includes a second processing unit, configured to control a display apparatus to display a first interface, where the first interface includes the connection relationship between the plurality of network devices.

With reference to the second aspect, in some implementations of the second aspect, the first interface includes a display area and a creation tool area. The creation tool area includes a plurality of network device objects of different types. The plurality of network device objects of different types are used to create the plurality of network devices. The display area is used to display the connection relationship between the plurality of network devices.

With reference to the second aspect, in some implementations of the second aspect, the connection relationship between the plurality of network devices includes a type of a communication port of each network device in the plurality of network devices. The communication port is a port connected to another network device.

With reference to the second aspect, in some implementations of the second aspect, the type of the communication port includes an ethernet port, a UART port, an LVDS port, or a CAN port.

With reference to the second aspect, in some implementations of the second aspect, the apparatus further includes a determining unit, configured to determine a communication relationship between the plurality of network devices based on the type of the communication port of each network device in the plurality of network devices and the basic configuration of each network device. The generation unit is configured to generate the network configuration information for each network device based on the communication relationship between the plurality of network devices.

With reference to the second aspect, in some implementations of the second aspect, the basic configuration of each network device further includes a virtual local area network identifier VLAN ID of the network device. The determining unit is configured to determine the communication relationship between the plurality of network devices based on the type of the communication port of each network device in the plurality of network devices and the VLAN ID of each network device.

With reference to the second aspect, in some implementations of the second aspect, the apparatus further includes a third processing unit, configured to: in response to an operation on a first network device, control the display apparatus to display a second interface. The obtaining unit is configured to obtain a basic configuration of the first network device via the second interface, where the first network device is any one of the plurality of network devices.

With reference to the second aspect, in some implementations of the second aspect, the basic configuration of each network device further includes a data stream configuration. The data stream configuration indicates a constraint on a data stream generated when the network device provides a service. The constraint on the data stream includes one or more of a flow direction of the data stream, a transmission speed of the data stream, and a priority of the data stream. The apparatus further includes a fourth processing unit, configured to control the display apparatus to display a third interface, where the third interface includes one or more of a flow direction of a data stream between the plurality of network devices, a transmission speed of the data stream, and a priority of the data stream.

**In** some possible implementations, the third processing unit and the fourth processing unit are a same processing unit.

With reference to the second aspect, in some implementations of the second aspect, the network configuration information includes one or more of an ACL, an ARL, an ARP table, and a routing table.

According to a third aspect, a network configuration apparatus is provided. The apparatus includes: a memory, configured to store a computer program; and a processor, configured to execute the computer program stored in the memory, for the apparatus to perform the method according to any one of the possible implementations of the first aspect.

According to a fourth aspect, an electronic device is provided. The electronic device includes the apparatus according to any one of the possible implementations of the second aspect or the third aspect.

In some possible implementations, the electronic device further includes a display apparatus.

According to a fifth aspect, a computer program product is provided. The computer program product includes computer program code. When the computer program code is run on a computer, the computer is enabled to perform the method according to any one of the possible implementations of the first aspect.

It should be noted that the computer program code may be completely or partially stored in a first storage medium. The first storage medium may be encapsulated with a processor, or encapsulated separately from a processor.

According to a sixth aspect, a computer-readable medium is provided. The computer-readable medium stores instructions. When the instructions are executed by a processor, the processor is enabled to implement the method according to any one of the possible implementations of the first aspect.

According to a seventh aspect, a chip is provided. The chip includes a circuit. The circuit is configured to perform the method according to any one of the possible implementations of the first aspect.

### BRIEF DESCRIPTION OF DRAWINGS

FIG. 1 is a functional block diagram of an intelligent driving device and a diagram of an EEA in the intelligent driving device according to an embodiment of this application;
FIG. 2 is a diagram of an application scenario of a network configuration method according to an embodiment of this application;
FIG. 3 is a schematic flowchart of a network configuration method according to an embodiment of this application;
FIG. 4 shows a group of GUIs according to an embodiment of this application;
FIG. 5 shows another group of GUIs according to an embodiment of this application;
FIG. 6 is another schematic flowchart of a network configuration method according to an embodiment of this application;
FIG. 7 is still another schematic flowchart of a network configuration method according to an embodiment of this application;
FIG. 8 is a block diagram of a network configuration apparatus according to an embodiment of this application; and
FIG. 9 is another block diagram of a network configuration apparatus according to an embodiment of this application.

### DESCRIPTION OF EMBODIMENTS

In descriptions of embodiments of this application, "/" means "or" unless otherwise specified. For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, "at least one" means one or more, and "a plurality of" means two or more than two. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

Prefix words such as "first" and "second" in embodiments of this application are merely intended to distinguish between different described objects, and impose no limitation on locations, rankings, priorities, quantities, content, or the like of the described objects. In embodiments of this application, use of the prefix words used to distinguish between the described objects, for example, ordinal numbers, constitutes no limitation on the described objects. For descriptions of the described object, refer to context descriptions in claims or embodiments. Use of the prefix words should not constitute a redundant limitation.

As described above, an EEA relates to one or more types of network interfaces and a network relationship between one or more types of sensors and an ECU. The one or more types of sensors and the ECU are interconnected over a plurality of communication protocols, which leads to complex and various network relationships. Consequently, during configuration of a communication architecture, a developer is troubled by the following problems such as high planning difficulty, a heavy configuration workload, and proneness to configuration errors. In a current technical background, common EEA design and communication architecture configuration solutions are as follows:
1. A network architecture designer plans and designs the EEA based on a service requirement, and outputs a design document (or configuration table). Further, a network configuration engineer communicates with the network architecture designer about a network design intent based on the design document to reach an agreement on an actual effect thereof, and then performs manual network configuration, debugging, and the like on an actual physical machine.
2. Network configuration is performed by using a static table. To be specific, first a network architecture designer plans and designs the EEA based on a service requirement, and outputs a design document. Then a network configuration engineer divides different vehicle-mounted network devices based on the design document. Further, the static table is filled in, and the different vehicle-mounted network devices are configured via different professional tools (or configuration interfaces) based on the static table, to generate a plurality of configuration files, which are separately delivered to different physical network devices for debugging.
3. Configuration entries are automatically generated by self-learning. To be specific, a user configures an internet protocol (Internet Protocol, IP) address, a media access control (media access control, MAC) address, and a VLAN ID on each physical machine. A local area network switch obtains a VLAN ID of a packet flowing through a switch port, and matches the VLAN ID with a value in a VLAN ID list currently configured on the switch port, to determine whether to allow forwarding of the packet. If the VLAN ID list includes the VLAN ID of the packet, information such as an IP address and a MAC address in the packet is automatically obtained, and configuration tables such as an ACL, an ARL, and an ARP table are automatically filled based on the obtained information. If the VLAN ID list does not include the VLAN ID of the packet, the forwarding fails, and the procedure of automatically learning the configuration entries ends.

The first two network configuration solutions have a small configuration granularity, which performs configuration on a specific network device in the EEA and lacks an overall planning and configuration capability as an EEA design. In addition, most of the EEA network configurations require static table filling, which cannot intuitively reflect an association relationship between network devices. Due to a complex topology relationship of an EEA architecture, the user needs to switch between properties in a plurality of tables back and forth in a configuration process. This increases configuration time costs and complexity. In addition, the first two network configuration solutions require a plurality of network configuration tables to be configured in a white box manner, and many properties are repeatedly configured. In this case, it is inconvenient for the user to understand and maintain a network configuration. The third network configuration solution brings a network link to a dynamic learning state while running. Due to uncertainty of this dynamic state, network security may be undermined, so that an attacker makes its way to inject attack information in a dynamic learning process of the network link. For example, if network configuration is performed by using a self-learning method in the vehicular field, the network link is in the dynamic learning state while a vehicle travels. In this case, the attacker may inject false information (for example, a braking signal or a turning signal) through the dynamic network link, which causes the vehicle to be out of control, and threatens safety of the vehicle and its passenger. Therefore, the third network configuration solution cannot meet requirements of the field of in-vehicle networks on high network reliability and security.

In view of this, this application provides a network configuration method and apparatus, to generate network configuration information for a vehicle-mounted network device in a development and design phase of an EEA based on a connection relationship between vehicle-mounted network devices that is planned by a user and a basic configuration of each network device. Generation and configuration of the network configuration information are completed in the development and design phase, and configuration does not need to be performed by using a self-learning method in an actual running process of the vehicle-mounted network device. Therefore, requirements of the field of in-vehicle networks on high reliability and high security of a network can be met. In addition, according to the network configuration method and apparatus provided in this application, the connection relationship between the network devices in the EEA can be displayed to the user, and a window for configuring a basic configuration of each network device can be provided for the user based on the connection relationship between the network devices in the EEA. This helps reduce time for the user to communicate with a network architect in a configuration process, and reduce a configuration workload of the user.

The following describes the technical solutions of embodiments in this application with reference to the accompanying drawings.

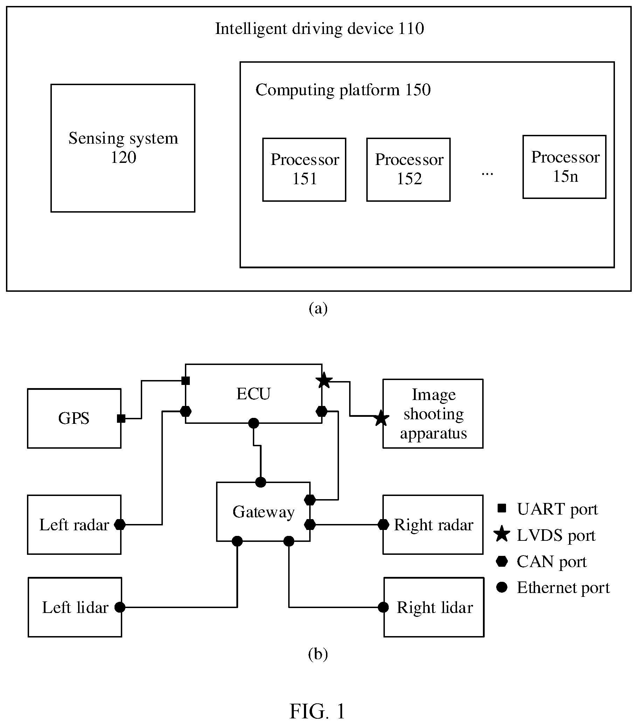

Herein, (a) in FIG. 1 (referred to as FIG. 1a for short below) is a functional diagram of an intelligent driving device 110 according to an embodiment of this application. As shown in FIG. 1a, the intelligent driving device 110 includes a sensing system 120 and a computing platform 150. The sensing system 120 may include several types of sensors configured to sense information about an environment around the intelligent driving device 110. For example, the sensing system 120 may include a positioning system. The positioning system may be a global positioning system (global positioning system, GPS), a BeiDou system, or another positioning system. For another example, the sensing system 120 may further include one or more of an inertial measurement unit (inertial measurement unit, IMU), a lidar, a millimeter-wave radar, an ultrasonic radar, and an image shooting apparatus.

Some or all of functions of the intelligent driving device 110 may be controlled by the computing platform 150. The computing platform 150 may include processors 151 to 15n. The processor is a circuit with a signal processing capability. In an implementation, the processor may be a circuit with an instruction reading and running capability, or may implement a specific function by using a logical relationship of a hardware circuit. The logical relationship of the hardware circuit may be fixed or reconfigurable. In addition, the computing platform 150 may further include a memory. The memory is configured to store instructions. Some or all of the processors 151 to 15n may invoke the instructions in the memory, to implement corresponding functions.

For example, the intelligent driving device in this application may be a vehicle in a broad sense, which may be a transport means (for example, a commercial vehicle, a passenger vehicle, a truck, a motorcycle, an airplane, a flight vehicle, a train, or a ship), an industrial vehicle (for example, a pallet truck, a trailer, or a tractor), an engineering vehicle (for example, an excavator, a bulldozer, or a crane), an agricultural device (for example, a lawn mower or a harvester), an amusement device, a toy vehicle, or the like. A type of the vehicle is not specifically limited in this application.

In a specific implementation process, the intelligent driving device 110 may be configured to be in a fully or partially autonomous driving mode, or may be manually driven by a user. For example, the intelligent driving device 110 may obtain information about the environment around the intelligent driving device 110 via the sensing system 120, and obtain an autonomous driving strategy based on analysis of the environment information, to implement fully autonomous driving, or present an analysis result to the user to implement partially autonomous driving.

The intelligent driving device 110 traveling on a road may identify an object in an ambient environment of the intelligent driving device 110 to adjust a current speed. The object may be another vehicle, a traffic control device, or another type of object. In some examples, each identified object may be independently considered. The speed to be adjusted by the intelligent driving device 110 may be determined based on respective features of objects, for example, a current speed and an acceleration of the object, and a spacing between the object and the intelligent driving device 110.

Optionally, the intelligent driving device 110 or a sensing and computing device (for example, the computing platform 150) associated with the intelligent driving device 110 may predict behavior of the identified object based on the feature of the identified object and a status (for example, traffic, rain, or ice on the road) of the ambient environment. Optionally, all identified objects depend on behavior of each other. Therefore, all the identified objects may be considered together to predict behavior of a single identified object.

In some possible implementations, the intelligent driving device 110 obtains the autonomous driving strategy based on analysis of the ambient environment, to implement fully autonomous driving or partially autonomous driving. For example, (b) in FIG. 1 (referred to as FIG. 1b for short below) shows an EEA in the intelligent driving device. As shown in FIG. 1b, an ECU may communicate with one or more types of sensors in the sensing system 120, for example, a GPS, an image shooting apparatus, a radar (radar), and a lidar (lidar), based on the EEA, to obtain the information about the environment and/or object information around the intelligent driving device 110, and then control the intelligent driving device 110 based on the information about the environment and/or the object information.

For example, the ECU supports one or more types of port protocols (or interface protocols), and therefore may communicate with one or more of the one or more types of sensors, a communication component, and in-vehicle infotainment (in-vehicle infotainment, IVI). For example, the ECU supports a multimedia serial link (multimedia serial link, MSL) interface, for example, a gigabit multimedia serial link (gigabit multimedia serial link, GMSL), and may communicate with the image shooting apparatus through an LVDS port based on the GMSL. The ECU supports a UART port, and may communicate with a positioning sensor like the GPS through the UART port. The ECU supports an ethernet port, and may communicate with the lidar, a gateway, a telematics box (telematics box, T-box), and the like through the ethernet port. The ECU supports a CAN port, and may communicate with the radar (for example, a millimeter-wave radar or an ultrasonic radar), the gateway, and the like through the CAN port.

For example, the ECU shown in FIG. 1b may be the computing platform 150 shown in FIG. 1a. The computing platform 150 may include at least one of an autonomous driving domain controller (advanced driving domain controller, ADC) (for example, a mobile data center (mobile data center, MDC)), a vehicle domain controller (vehicle domain controller, VDC), and a chassis domain controller (chassis domain controller, CDC). Alternatively, the computing platform 150 further includes another controller, for example, an in-car application server (in-car application server, ICAS) controller, a body domain controller (body domain controller, BDC), a special equipment system (special equipment system, SES), a media graphics unit (media graphics unit, MGU), a body super core (body super core, BSC), an ADAS super core (ADAS super core), or the like. This is not limited in this application. The ICAS may include at least one of the following: a vehicle control server ICAS 1, an intelligent driving server ICAS 2, an intelligent cockpit server ICAS 3, and an infotainment server ICAS 4.

The foregoing components are merely examples. In practice, the components in the foregoing modules may be added or removed based on an actual requirement. FIG. 1 should not be understood as a limitation on embodiments of this application.

To implement communication between the components in FIG. 1b, configuration tables such as an ACL, an ARL, an ARP table, and a routing table of each of the foregoing components need to be configured. For example, the ACL, the ARL, the ARP table, and the routing table may be configured for each of the foregoing components by using the network configuration method in this application.

Before the network configuration method provided in embodiments of this application is described, a system architecture required for implementing the network configuration method provided in embodiments of this application and an application scenario of the network configuration method are first described.

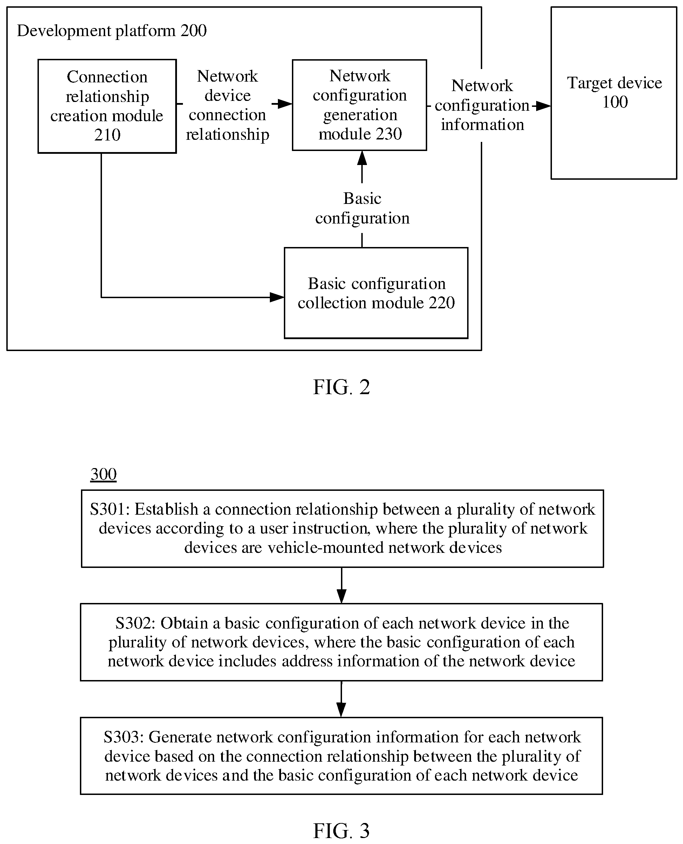

FIG. 2 is a diagram of an application scenario of the network configuration method according to an embodiment of this application. The network configuration method is applied, for example, to a system including a development platform 200 and a target device 100. The development platform 200 generates network configuration information to be deployed on the target device 100, which may test the network configuration information, or may perform communication based on the network configuration information. The development platform 200 may include a connection relationship creation module 210, a basic configuration collection module 220, and a network configuration generation module 230. Specifically, the connection relationship creation module 210 may display a creation tool area to the user via a graphical user interface (graphical user interface, GUI). The creation tool area may include a vehicle-mounted network device object, a communication port object, and a hardware connection relationship object. The vehicle-mounted network device object is used to create a vehicle-mounted network device instance. The communication port object is used to create a port instance used by a vehicle-mounted network device for communication. The hardware connection relationship object is used to create a link instance used for communication between vehicle-mounted network devices. It may be understood that each vehicle-mounted network device instance corresponds to one real vehicle-mounted network device in an intelligent driving device (for example, a vehicle), each port instance corresponds to one real port used by a vehicle-mounted network device for communication, and each link instance corresponds to one real communication link between the vehicle-mounted network devices. The connection relationship creation module 210 may establish a connection relationship between a plurality of vehicle-mounted network device instances according to a user instruction, and control a display apparatus to display the connection relationship. The basic configuration collection module 220 is configured to receive a basic configuration input by the user for the vehicle-mounted network device instance. The basic configuration may include one or more of information such as an IP address, a MAC address, and a VLAN ID. Further, the connection relationship creation module 210 sends the connection relationship between the plurality of vehicle-mounted network device instances to the network configuration generation module 230. In addition, the basic configuration collection module 220 sends basic configurations corresponding to the plurality of vehicle-mounted network device instances to the network configuration generation module 230. The network configuration generation module 230 generates, based on the connection relationship between the plurality of vehicle-mounted network device instances and a basic configuration of each vehicle-mounted network device instance in the plurality of vehicle-mounted network device instances, network configuration information, for example, one or more of an ACL, an ARL, an ARP table, and a routing table, for a vehicle-mounted network device corresponding to each vehicle-mounted network device instance. Further, a developer or the development platform 200 may configure, on each vehicle-mounted network device in the target device 100 (for example, the intelligent driving device 110), the network configuration information generated by the network configuration generation module 230, to configure an EEA communication architecture of the intelligent driving device.

In some possible implementations, the network configuration generation module 230 obtains a network device connection relationship from the connection relationship creation module 210 in response to a user instruction. For example, the user instruction may be an instruction generated based on a first operation of the user. The first operation may be an operation of successively tapping the hardware connection relationship object and the vehicle-mounted network device object, or the first operation may be an operation of dragging the hardware connection relationship object onto the vehicle-mounted network device instance.

For example, the vehicle-mounted network device may include the ECU, the sensor (for example, one or more types of sensors in the sensing system 120), and the like in the foregoing embodiments.

In some possible implementations, the development platform 200 may further generate network configuration information based on an imported model for each network device in the model. The imported model includes a plurality of network devices, a connection relationship between the plurality of network devices, and a basic configuration of each network device in the plurality of network devices. In the foregoing implementation, the connection relationship creation module 210 may parse the connection relationship between the plurality of network devices in the imported model. The basic configuration collection module 220 may extract the basic configuration of each network device in the plurality of network devices. The network configuration generation module 230 may generate the network configuration information for each network device in the plurality of network devices in the imported model based on the connection relationship obtained by the connection relationship creation module 210 through parsing and the basic configuration extracted by the basic configuration collection module 220.

The foregoing modules and apparatus are merely examples. In practice, the foregoing modules and apparatus may be added or deleted based on an actual requirement. In an example, the connection relationship creation module 210 and the basic configuration collection module 220 may be combined into one module. In other words, functions of the connection relationship creation module 210 and the basic configuration collection module 220 are implemented by one module.

FIG. 3 is a schematic flowchart of a network configuration method according to an embodiment of this application. The method 300 may be performed by the development platform 200 shown in FIG. 2, may be performed by a system-on-chip (system-on-chip, SoC) in the development platform 200, or may be performed by a processor in the development platform 200. The following describes the method 300 by using an example in which the development platform performs the method 300. The method 300 may include steps S301 to S303.

S301: Establish a connection relationship between a plurality of network devices according to a user instruction, where the plurality of network devices are vehicle-mounted network devices.

For example, the vehicle-mounted network device may include one or more sensors and one or more types of ECUs in the foregoing embodiments.

In some possible implementations, before the connection relationship between the plurality of network devices is established according to the user instruction, a display apparatus is controlled to display a first interface. The first interface includes a display area and a creation tool area. The creation tool area includes a plurality of network device objects of different types. The plurality of network device objects of different types are used to create the plurality of network devices. After the connection relationship between the plurality of network devices is established according to the user instruction, the connection relationship between the plurality of network devices is displayed in the display area of the first interface.

For example, the display apparatus may be a display of an electronic device on which the development platform 200 is deployed, or may be another display apparatus associated with the development platform 200.

In some possible implementations, the connection relationship between the plurality of network devices includes a type of a communication port of each network device in the plurality of network devices. The communication port is a port connected to another network device.

For example, the type of the communication port includes an ethernet port, a UART port, an LVDS port, or a CAN port. More specifically, the ethernet port may include an ETH port and a switch port. The ETH port serves as a source port or a destination port for ethernet communication. The switch port is configured to forward ethernet packets.

In some possible implementations, the creation tool area further includes a communication port object and a hardware connection relationship object. The communication port object is used to create the communication port on the network device. The hardware connection relationship object is used to create a connection relationship between communication ports.

S302: Obtain a basic configuration of each network device in the plurality of network devices, where the basic configuration of each network device includes address information of the network device.

For example, address information of a network device may include at least one of an IP address, a MAC address, and a VLAN ID.

It should be understood that address information of a network device may include a plurality of IP addresses, may include a plurality of MAC addresses, or may include a plurality of VLAN IDs.

In some possible implementations, obtaining the basic configuration of each network device in the plurality of network devices may include: in response to an operation on a first network device, controlling the display apparatus to display a second interface, and obtaining a basic configuration of the first network device via the second interface, where the first network device is any one of the plurality of network devices.

S303: Generate network configuration information for each network device based on the connection relationship between the plurality of network devices and the basic configuration of each network device.

For example, the network configuration information may include one or more of an ACL, an ARL, an ARP table, and a routing table.

In some possible implementations, generating the network configuration information for each network device may include: determining a communication relationship between the plurality of network devices based on the type of the communication port of each network device in the plurality of network devices and the basic configuration of each network device; and generating the network configuration information for each network device based on the communication relationship between the plurality of network devices.

For example, one network device may include one or more ethernet subdevices. Each ethernet subdevice is configured to process ethernet packets. One or more ethernet subdevices may be located in one VLAN, or one or more ethernet subdevices may be located in a plurality of VLANs.

For example, the ethernet subdevice may be a device configured to process ethernet packets in the network device, and the ethernet subdevice may include an ETH device and/or a virtual ETH device. The ETH device is a device that has a physical connection relationship with an external device or communication port. The virtual ETH device is a virtual sub network interface card device abstracted from the ETH device.

In some possible implementations, the basic configuration of each network device includes a VLAN ID of the network device. Determining the communication relationship between the plurality of network devices includes: determining the communication relationship between the plurality of network devices based on the type of the communication port of each network device in the plurality of network devices and the VLAN ID of each network device.

For example, in one or more network device sets including ethernet subdevices of a plurality of network devices, a communication relationship between the plurality of network devices may include a communication relationship between ethernet subdevices in each network device set. Herein, ethernet subdevices in one network device set are located in a same VLAN (that is, have a same VLAN ID). Alternatively, although ethernet subdevices in one network device set are not located in a same VLAN, the ethernet subdevices may communicate with each other (that is, VLAN IDs of the ethernet subdevices in the set are all null).

In some possible implementations, the basic configuration of each network device further includes a data stream configuration. The data stream configuration indicates a constraint on a data stream generated when the network device provides a service. The constraint on the data stream includes one or more of a flow direction of the data stream, a transmission speed of the data stream, and a priority of the data stream. The method 300 further includes: controlling the display apparatus to display a third interface, where the third interface includes one or more of a flow direction of a data stream between the plurality of network devices, a transmission speed of the data stream, and a priority of the data stream.

In some possible implementations, the third interface and the first interface may be a same interface.

In some possible implementations, the network configuration information may further include configuration information related to one or more of the CAN port, the LVDS port, and the UART port.

It should be noted that the plurality of network devices in embodiments of this application may be the vehicle-mounted network device instances in the foregoing embodiments, and the vehicle-mounted network device instances represent actual vehicle-mounted network devices in an intelligent driving device; and the communication port of the network device may be the port instance used by the vehicle-mounted network device for communication in the foregoing embodiments, and the port instance represents an actual port used by the vehicle-mounted network device in the intelligent driving device for communication. It may be understood that the "connection relationship between the plurality of network devices" in embodiments of this application corresponds to a connection relationship between the actual vehicle-mounted network devices in the intelligent driving device; and further, the "network configuration information generated for each network device" in embodiments of this application may be configured on the actual vehicle-mounted network devices of the intelligent driving device, to implement communication between the actual vehicle-mounted network devices.

According to the network configuration method provided in embodiments of this application, in a development and design phase of an EEA, a connection relationship between network devices in the EEA can be displayed to a user, and a window for configuring a basic configuration of each network device can be provided for the user based on the connection relationship between the network devices in the EEA. This helps reduce time for the user to communicate with a network architect in a configuration process, and reduce a configuration workload of the user. Further, the network configuration information can be generated for the vehicle-mounted network device based on the connection relationship between the vehicle-mounted network devices that is designed by the user and the basic configuration input by the user. Generation and configuration of the network configuration information are completed in the development and design phase, and configuration does not need to be performed by using a self-learning method in an actual running process of the vehicle-mounted network device. Therefore, requirements of the field of in-vehicle networks on high reliability and high security of a network can be met.

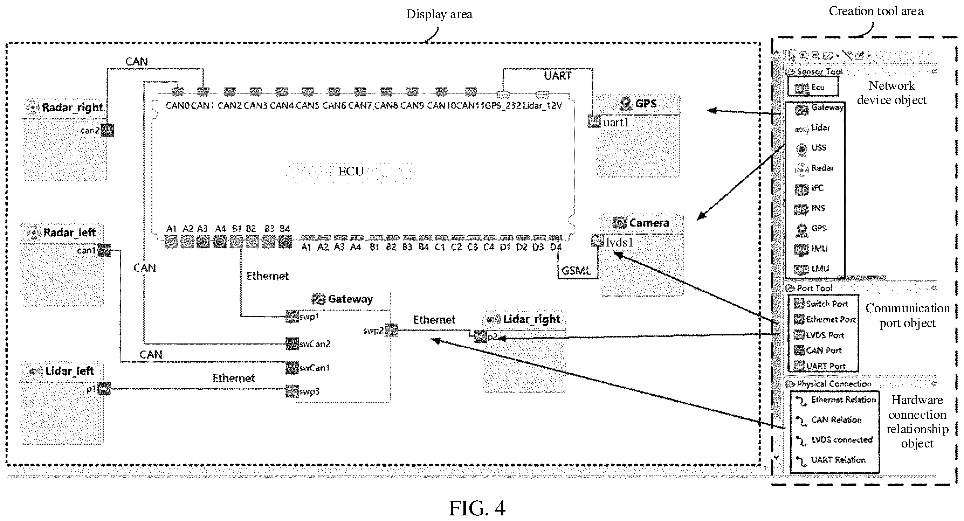

FIG. 4 is a diagram of a GUI according to an embodiment of this application. The GUI may be understood as an example of the first interface in the method 300. As shown in FIG. 4, the GUI includes a display area and a creation tool area. The creation tool area includes a network device object, a communication port object, and a hardware connection relationship object.

For example, the network device object includes "ECU", "Gateway", "Lidar", "USS", "Radar", "IFC", "INS", "GPS", "IMU", and "LMU" that are used to create an ECU, a gateway, a lidar, an ultrasonic sensor, a radar, a vehicle-mounted camera, an inertial navigation system, a global positioning system, an inertial measurement unit, and a tension/compression load cell LMU respectively. The communication port object includes "Switch Port" and "Ethernet Port" that are used to create an ethernet port, "LVDS Port" used to create an LVDS port, "CAN Port" used to create a CAN port, and "UART Port" used to create a UART port. More specifically, "Switch Port" is used to create a switch port for forwarding packets, and "Ethernet Port" is used to create an ETH port serving as a communication source end or destination end. The hardware connection relationship object includes "Ethernet Relation", "CAN Relation", "LVDS connected", and "UART Relation" that are used to complete an ethernet connection, a CAN port connection, an LVDS port connection, and a UART port connection respectively. A topology structure between network devices displayed in the display area may be understood as an example of the "connection relationship between the plurality of network devices".

The following uses the topology structure between the network devices displayed in the display area in FIG. 4 as an example to describe an implementation of "establish a connection relationship between a plurality of network devices according to a user instruction" in S301. For example, "establish a connection relationship between a plurality of network devices according to a user instruction" may include the following steps 1 to 3.

Step 1: Establish a network device in the display area according to a user instruction. For example, the user instruction may include at least one of the following: an instruction generated when an operation of successively tapping a network device object in the creation tool area and a blank area of the display area is detected, an instruction generated when an operation of dragging a network device object in the creation tool area to a blank area of the display area is detected, or an instruction generated based on another operation of the user. For example, the user taps the network device object "Radar", and then taps the blank area of the display area. In this case, when the operation is detected, a network device, namely, a radar ("Radar_left" or "Radar_right" shown in FIG. 4) is established, and the radar is displayed in the display area.

Step 2: Establish a communication port for the network device according to a user instruction. For example, the user instruction may include at least one of the following: an instruction generated when an operation of successively tapping a communication port object in the creation tool area and a network device is detected, an instruction generated when an operation of dragging a communication port object in the creation tool area to a network device is detected, or an instruction generated based on another operation of the user. For example, the user drags the communication port object "CAN Port" to a network device "Radar_left". In this case, when the operation is detected, an association relationship between "Radar_left" and "CAN Port" is established, and the radar having a CAN communication port (for example, "Radar_left" and a communication port "can1" thereof shown in FIG. 4) is shown in the display area.

Step 3: Establish a connection relationship between two network devices according to a user instruction. For example, the user instruction may include at least one of the following: an instruction generated when an operation of successively tapping a hardware connection relationship object in the creation tool area and communication ports of two network devices is detected, or an instruction generated based on another operation of the user. For example, the user first taps the hardware connection relationship object "LVDS connected", and then successively taps a communication port "lvds1" on "Camera" and a communication port "D4" on "ECU". In this case, when the operations are detected, a GMSL connection between the communication port "lvds1" of "Camera" and the communication port "D4" of "ECU" is established, and the connection relationship is displayed in the display area.

It may be understood that establishment of the EEA topology structure shown in the display area in FIG. 4 may be completed by using step 1 to step 3.

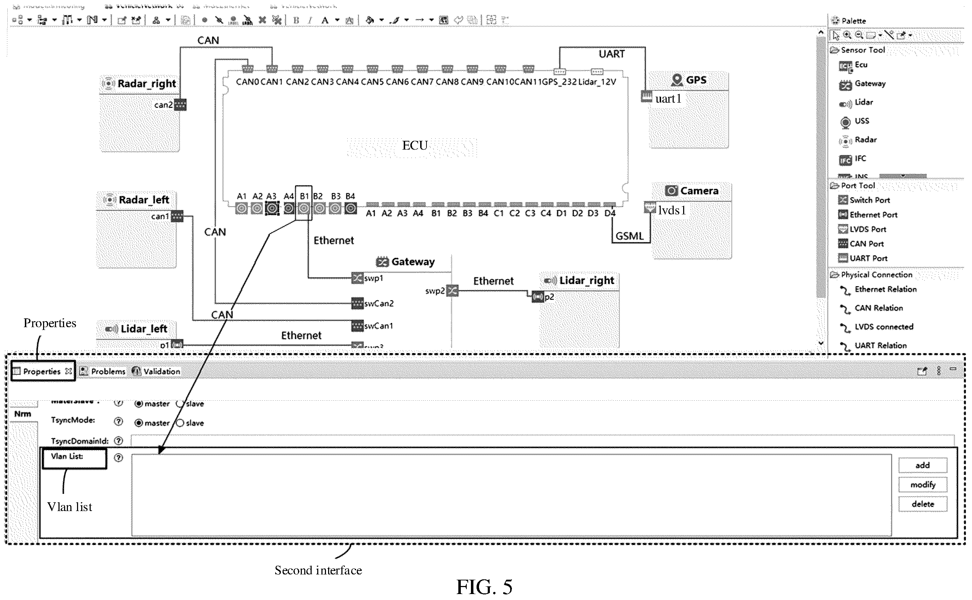

FIG. 5 is a diagram of a GUI according to an embodiment of this application. As shown in FIG. 5, the GUI includes the second interface. The basic configuration of the first network device in the plurality of network devices may be obtained by using an input of the user on the second interface. In some possible implementations, obtaining the basic configuration of the first network device may include at least one of the following: displaying the second interface in response to an operation of tapping the first network device, and obtaining the basic configuration of the first network device via the second interface; and displaying the second interface in response to an operation of tapping a communication port of the first network device, and obtaining the basic configuration of the first network device (or the communication port) via the second interface. For example, the first network device is "ECU". When an operation that the user taps a "B1" port on "ECU" is detected, the second interface shown in FIG. 5 may be displayed. The second interface includes information about a property bar. The user may input basic configuration in the property bar. For example, the basic configuration may include a Vlan list (Vlan List), an IP address, and a MAC address. For example, the user may enter, in the Vlan list, a VLAN ID of a VLAN supported by the "B1" port.

Further, a basic configuration of "ECU" is obtained in response to detecting the input of the user in the property bar.

It should be noted that, when the first network device has a plurality of communication ports, the second interface is displayed in response to the operation on the first network device, and the basic configuration of the first network device obtained via the second interface may include a basic configuration of one or more communication ports of the first network device.

For example, to implement the network configuration method provided in embodiments of this application, on the development platform configured to perform the network configuration method in this application, element models may be defined for various types of ECUs (and/or sensors), the communication port and the hardware connection relationship that are related to "establish a connection relationship between a plurality of network devices", and may specifically include the following types.
1. AbstractEcu element model: common parent class AbstractEcu of all ECU and sensor types. The class includes a set of communication ports of all protocol types. For example, "GPS", "Camera", "Radar", "Lidar", and "ECU" shown in FIG. 4 or FIG. 5 are each a subclass of this class, and inherit a property of the class. For example, the property of the class includes one or more of the following:
   ETH port list: list of ETH ports used by an ECU or a sensor, where one ECU or sensor may have a plurality of ETH ports;
   CAN port list: list of CAN ports used by the ECU or the sensor for CAN or controller area network-flexible data (controller area network-flexible data, CAN-FD) communication, where one ECU or sensor may have a plurality of CAN ports;
   UART port list: list of UART ports used by the ECU or the sensor for UART communication, where one ECU or sensor may have a plurality of UART ports;
   LVDS port list: list of LVDS ports used by the ECU or the sensor for LVDS communication, where one ECU or sensor may have a plurality of LVDS ports;
   ETH device list: list of ETH devices that are on the ECU or the sensor and that process ethernet packets, where one ECU or sensor may have a plurality of ETH devices;
   CAN device list: list of CAN devices that are on the ECU or the sensor and that process CAN packets, where one ECU or sensor may have a plurality of CAN devices; and
   Lan switch list: list of switch devices on the ECU or the sensor, where one ECU or sensor may have a plurality of Lan switch devices (referred to as switch devices for short below) inside.

For example, in step 2 in the foregoing embodiment, when a communication port is established for a network device according to a user instruction, information about the communication port is added to a corresponding communication port list in an element model of the network device. For example, a CAN communication port "can1" is established for the network device "Radar _left" according to a user instruction. In this case, "can1" is added to a "CAN port list" of "Radar_left".
2. Lan switch element model: switch (which may be a switching unit) inside an ECU or a sensor, configured to implement an interconnection between a plurality of network devices and a plurality of communication ports, with the following properties:
   name: globally unique identity for a current switch; and
   switch port list: a set to store all switch ports on the current switch.
3. Switch port element model: port configured to forward packets on a switch device, having the following specific properties:
   channel ID: globally unique identity for a current switch port, for example, "swp1", "swp2", or "swp3" shown in FIG. 4;
   VLAN list: list to store VLAN IDs, used to record VLANs in which the current switch port may exist; and
   connected port: This property is used to record that a connection relationship between the current switch port and another switch port (or ETH port) is created by using a hardware connection object.

For example, in step 3 in the foregoing embodiment, when the connection relationship between the two network devices is established according to the user instruction, information about peer communication ports may be added to corresponding connected ports in communication port element models of the two network devices. For example, "B1" may be added to "Connected port" of "swp1" when a connection relationship between a switch port "swp1" of a network device "Gateway" and an ETH port "B1" of a network device "ECU" is established according to a user instruction.

4. ETH port element model: port used by an ECU or a sensor for ethernet communication, with the following properties:
channel ID: globally unique identity for a current ETH port, for example, "p1" or "p2" shown in FIG. 4;
VLAN list: list to sore VLAN IDs, used to record VLANs in which the current ETH port may exist; and
connected port: This property is used to record that a connection relationship between the current ETH port and another ETH port (or switch port) is created by using a hardware connection object.

For example, in step 3 in the foregoing embodiment, when the connection relationship between the two network devices is established according to the user instruction, information about peer communication ports may be added to corresponding connected ports in communication port element models of the two network devices. For example, "swp2" may be added to "Connected port" of "p2" when a connection relationship between an ETH port "p2" of a network device "Lidar_right" and a switch port "swp2" of a network device "Gateway" is established according to a user instruction.

5. ETH device element model: device that is on an ECU or a sensor and that processes an ethernet packet, with the following properties:
ETH name: globally unique identity for a current ETH device;
connected port: identifying which ETH port (or switch port) is used by the current ETH device to connect to the outside;
virtual ETH device list: list to store a current virtual ETH device on a network;
IP list: a set to store an IP address of a current ETH device;
MAC list: used to configure a MAC address of the current ETH device; and
data stream list: list to store a data stream generated when the current ETH device provides a service, where a "data stream configuration" property is set for each data stream in the data stream list.

For example, one ECU or sensor may include one or more ETH devices. In the foregoing embodiments, the basic configuration of the first network device obtained via the second interface may be added to an "IP list" and a "MAC list" in an ETH device element model of the first network device.

For example, the ETH device may be an example of the ethernet subdevice in the foregoing embodiments.
6. Virtual ETH device element model: virtual sub network interface card device abstracted from an ETH device, with the following properties:
   VLAN ID: identifying a VLAN in which a current virtual ETH device is located;
   IP list: a set to store an IP address of the current virtual ETH device;
   MAC list: used to configure a MAC address of the current virtual ETH device; and
   data stream list: list to store a data stream generated when the current virtual ETH device provides a service, where a "data stream configuration" property is set for each data stream in the data stream list.
7. Data stream configuration: used to identify a constraint on a current data stream, where the constraint on the data stream includes one or more of a flow direction of the data stream, a transmission speed of the data stream, and a priority of the data stream; and the data stream configuration has the following properties:
   SourceIP: IP address of a host that sends the data stream;
   SourcePort: port used by the host that sends the data stream to provide a service for the outside;
   DestIP: IP address of a host that receives the data stream;
   DestPort: port used by the host that receives the data stream to provide a service to the outside;
   protocol: used for transmission of the data stream;
   descriptions: specific function provided by the data stream for the outside;
   transmission speed: describing a transmission rate of the data stream; and
   priority: describing a priority of the data stream, where
   SourceIP, SourcePort, DestIP, and DestPort may be summarized as the flow direction of the data stream.
8. CAN port element model: connection port used by an ECU or a sensor for CAN/CANFD communication, with the following properties:
   channel ID: globally unique identity for a current CAN port, for example, "swCan1", "swCan2", "can1", or "can2" shown in FIG. 4; and
   connected port: This property is used to record that a connection relationship between the current CAN port and another CAN port is created by using a hardware connection object.
9. CAN device element model: device that is on an ECU or a sensor and that processes CAN communication packets, with the following properties:
   CAN name: globally unique identity for a current CAN device;
   connected port: identifying a CAN port used by the current CAN device to connect to the outside; and
   CAN ID list: list to store a CAN ID of the current CAN device, where the CAN ID is an address value under a CAN protocol.
10. UART port element model: port used by an ECU or a sensor for UART communication, with the following properties:
   channel ID: globally unique identity for a current UART port, for example, "uart1" shown in FIG. 4; and
   connected port: This property is used to record that a connection relationship between the current UART port and another UART port is created by using a hardware connection object.
11. LVDS port element model: port used by an ECU or a sensor for LVDS communication, with the following properties:
   channel ID: globally unique identity for a current LVDS port, for example, "lvds1" shown in FIG. 4; and
   connected port: This property is used to record that a connection relationship between the current LVDS port and another LVDS port is created by using a hardware connection object.

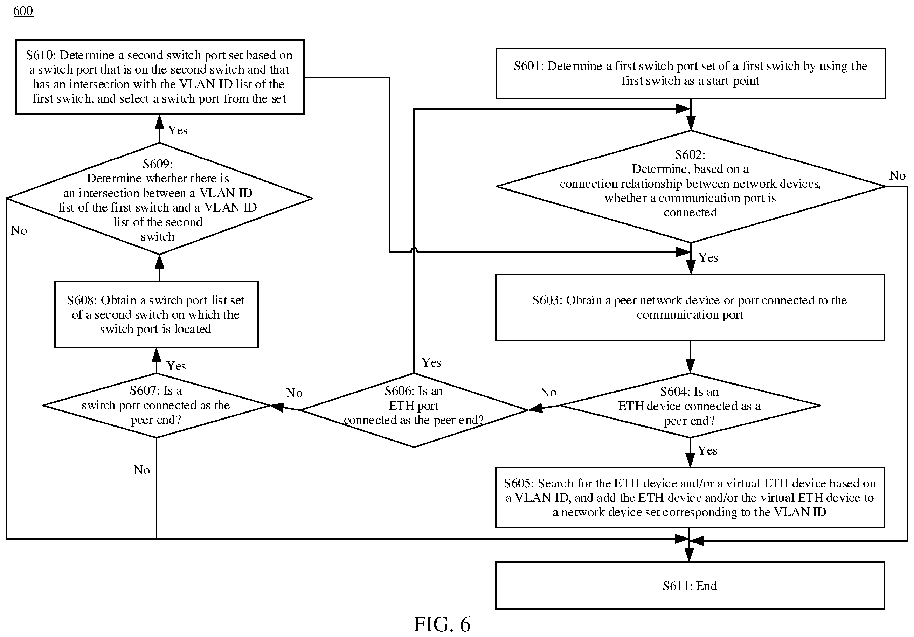

FIG. 6 is a schematic flowchart of a network configuration method according to an embodiment of this application. The method 600 may be performed by the network configuration generation module 230 in the development platform 200 shown in FIG. 2, may be performed by the development platform 200, may be performed by a SoC in the development platform 200, or may be performed by a processor in the development platform 200. The method 600 is performed in parallel to the method 300, or may be performed after the method 300. The method 600 may be considered as an extension of the method 300. For example, the method 600 is a detailed description of S303 in the method 300. The method 600 may include steps S601 to S611.

S601: Determine a first switch port set of a first switch by using the first switch as a start point.

For example, the first switch may be a switch inside one network device in the plurality of network devices in the foregoing embodiments, for example, may be an ECU ("ECU" shown in FIG. 4 and FIG. 5) or a switch inside a sensor. Alternatively, the first switch may be a gateway ("Gateway" shown in FIG. 4 and FIG. 5) used only for a switching function. The first switch port set includes all switch ports on the first switch.

For example, the first switch port set may be determined based on a "switch port list" of the first switch.

S602: Determine, based on a connection relationship between network devices, whether a communication port is connected.

Specifically, S603 is performed if the communication port is connected, while S611 is performed if the communication port is not connected.

For example, the communication port may be a port in the first switch port set, or may be an ETH port in S606.

For example, the connection relationship may be a hardware connection relationship, that is, a connection relationship established by using a hardware connection relationship object.

In some possible implementations, whether the communication port is connected is determined based on whether a "Connected port" of the communication port is null. If the "Connected port" is null, it indicates that the communication port is not connected.

S603: Obtain a peer network device or port connected to the communication port.

S604: Determine whether an ETH device is connected as a peer end.

Specifically, S605 is performed if the ETH device is connected as the peer end, while S606 is performed if the ETH device is not connected as the peer end.

S605: Search for the ETH device and/or a virtual ETH device based on a VLAN ID, and add the ETH device and/or the virtual ETH device to a network device set corresponding to the VLAN ID.

For example, the communication port may exist in one or more VLANs. Correspondingly, a "VLAN list" of the communication port may include one or more VLAN IDs, or a "VLAN list" of the communication port may be empty.

In some possible implementations, based on all VLAN ID values in the "VLAN list" of the communication port, a virtual ETH device whose VLAN ID is the same as each VLAN ID value is searched on the ETH device by using each VLAN ID value as a reference. If the virtual ETH device is found, it indicates that a virtual connection relationship exists between the communication port and the virtual ETH device in a VLAN corresponding to a current VLAN ID value. In this case, the virtual ETH device is added to a network device set corresponding to the current VLAN ID value. The "virtual connection relationship" indicates that there is no hardware connection relationship between two communication ports, but the two communication ports may still communicate with each other.

In some possible implementations, if the "VLAN list" of the communication port is empty, an ETH device found based on the hardware connection relationship is directly added to a network device set corresponding to a VLAN ID that is null.

In some possible implementations, a switch port that is of the first switch and that is used as a start point to determine each ETH device and/or virtual ETH device in one network device set needs to be recorded. In this way, a set corresponding to each VLAN ID is globally unique, and it is ensured that ETH devices and/or virtual ETH devices found by using one VLAN ID are all in a same network device set.

S606: Determine whether the ETH port is connected as the peer end.

Specifically, S602 is performed if the ETH port is connected as the peer end, that is, whether the ETH port is connected is determined by using the ETH port as a start point and based on the connection relationship between the network devices. S607 is performed if the ETH port is not connected as the peer end.

For example, if the ETH port is connected as the peer end, whether a VLAN ID list of the network device or a port includes a VLAN ID the same as a first VLAN ID in a VLAN ID list of the communication port. If there is an intersection, the network device or a network device corresponding to the port is added to a network device set corresponding to the first VLAN ID.

In some possible implementations, the VLAN ID list of the communication port is used as a repeated VLAN ID list to determine whether there is an intersection between the repeated VLAN ID list and the VLAN ID list of the peer ETH port. If there is an intersection, it indicates that a virtual connection relationship exists between the communication port and the peer ETH port, and the repeated VLAN ID list is updated. An updated repeated VLAN ID list includes an intersection between the VLAN ID list of the communication port and the VLAN ID list of the peer ETH port. It may be understood that the updated repeated VLAN ID list indicates VLANs in which the communication port and the peer ETH port are located together. If there is no intersection, it indicates that the link is disconnected, and no further search is performed.

It should be noted that, only when both the VLAN ID list of the communication port and the VLAN ID list of the peer ETH port are empty, the peer ETH port is added to a set of ETH ports whose VLAN IDs are null. These ETH ports whose VLAN IDs are null do not communicate with each other via a VLAN, but some ETH ports may communicate with each other in another manner, for example, communicate with each other through a physical connection. Further, the ETH ports whose VLAN IDs are null but may communicate with each other may be determined based on the connection relationship. Network devices corresponding to these ETH ports constitute a network device set, and a VLAN ID corresponding to the network device set is null.

S607: Determine whether a switch port is connected as the peer end.

Specifically, S608 is performed if the switch port is connected as the peer end. S611 is performed if the switch port is not connected as the peer end.

S608: Obtain a switch port list set of a second switch on which the switch port is located.

For example, all switch ports other than a current switch port on the second switch on which the switch port is located are obtained as the switch port list set.

S609: Determine whether there is an intersection between a VLAN ID list of the first switch and a VLAN ID list of the second switch.

Specifically, S610 is performed if there is an intersection between the VLAN ID list of the first switch and the VLAN ID list of the second switch. S611 is performed if there is no intersection between the VLAN ID list of the first switch and the VLAN ID list of the second switch.

S610: Determine a second switch port set based on a switch port that is on the second switch and that has an intersection with the VLAN ID list of the first switch, and select a switch port from the set.

In some possible implementations, the VLAN ID list of the communication port is used as the repeated VLAN ID list to determine whether there is an intersection between the repeated VLAN ID list and a VLAN ID list of the peer switch port. If there is an intersection, it indicates that a virtual connection relationship exists between the communication port and the peer switch port, and the repeated VLAN ID list is updated. An updated repeated VLAN ID list (referred to as a second repeated VLAN ID list for short below) includes an intersection between the VLAN ID list of the communication port and the VLAN ID list of the peer switch port.

Further, a VLAN ID list of each switch port other than the peer switch port of the communication port in the switch port list is compared with the second repeated VLAN ID in sequence to determine all switch ports whose VLAN ID lists have an intersection with the second repeated VLAN ID list. All the switch ports constitute a second switch port set. The repeated VLAN ID list is updated for each switch port other than the peer switch port of the communication port in the second switch port set. An updated repeated VLAN ID list includes an intersection between the second repeated VLAN ID list and the VLAN ID list of the switch port. If the second repeated VLAN ID list is empty, all switch ports whose VLAN ID lists are empty are directly found in the switch port list set as the second switch port set.

Further, S603 continues to be performed.

S611: End.

It may be understood that, by using the method 600, a plurality of network devices may be divided into one or more network device sets, where each network device set has a same VLAN ID and is located in a same broadcast domain.

For example, S604 to S610 may be summarized as follows: A communication relationship between the plurality of network devices is determined based on a type of a communication port of each network device in the plurality of network devices and a basic configuration of each network device. The basic configuration includes a VLAN ID.

For example, S601 to S611 may be summarized as follows: The communication relationship between the plurality of network devices is determined based on the type of the communication port of each network device in the plurality of network devices and the VLAN ID of each network device.

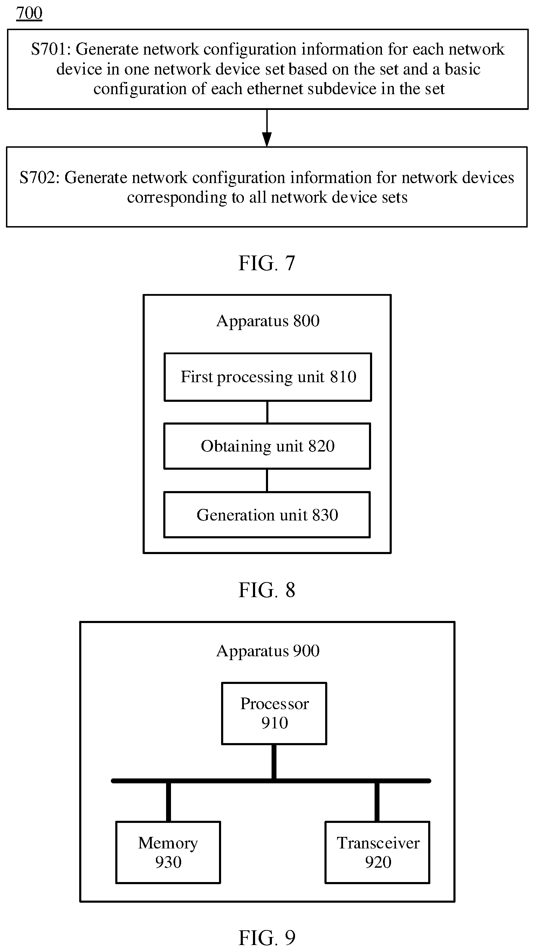

FIG. 7 is a schematic flowchart of a network configuration method according to an embodiment of this application. The method 700 may be performed by the network configuration generation module 230 in the development platform 200 shown in FIG. 2, may be performed by the development platform 200, may be performed by a SoC in the development platform 200, or may be performed by a processor in the development platform 200. The method 700 is performed in parallel to the method 300, or may be performed after the method 300. The method 700 may be considered as an extension of the method 300. The method 700 may be performed after the method 600. The method 700 may include steps S701 and S702.

S701: Generate network configuration information for each network device in one network device set based on the set and a basic configuration of each ethernet subdevice in the set.

For example, the network configuration information may be the network configuration information in the foregoing embodiments, for example, may include at least one of an ACL, an ARL, an ARP table, and a routing table.

For example, the basic configuration may include one or more of an IP address, a MAC address, a data stream configuration, and a VLAN ID.

In some possible implementations, when the network device includes one or more switches, an ACL and/or an ARL table are/is generated for each switch in the one or more switches. Further, an ARP table and a routing table are generated for each network device.

In an example, a VLAN ID of the network device set is obtained, a start switch port of the set and MAC addresses (including multicast and unicast MAC addresses) of all ethernet subdevices in the set are determined; and an ARL table is generated, based on the foregoing MAC address and an ARL entry format and content specification that are commonly used in the industry, for a switch on which the start switch port is located. For example, an ARL table may not be generated for an ethernet subdevice in a network device set whose VLAN ID is null.

In another example, data stream configurations of all the ethernet subdevices in the network device set are obtained, and an ACL table is generated, based on SourceIP, SourcePort, DestIP, DestPort, a protocol, descriptions, and the like in the data stream configurations and an ACL entry format and content specification that are commonly used in the industry, for the switch on which the start switch port is located. In some possible implementations, IP addresses of all the ethernet subdevices in the network device set may be used as a candidate value set for SourceIP, to avoid an incorrect IP address configuration caused by a manual input by a user.

In still another example, because one network device set is located in one VLAN (that is, located in one broadcast domain), an ARP packet may be forwarded to all ethernet subdevices in the network device set. Each ethernet subdevice in the network device set is traversed. An IP address and a MAC address of a currently traversed ethernet subdevice is recorded. A full ARP table is generated based on the IP address and the MAC address and a VLAN ID of the network device set. Further, an ARP table corresponding to the VLAN ID is generated, based on the full ARP table, for a network device on which each ethernet subdevice is located.

In yet still another example, each ethernet subdevice in the network device set is traversed. The IP address of the currently traversed ethernet subdevice is recorded. Whether the IP address belongs to a host or a gateway is recorded. A local routing table corresponding to the VLAN ID is generated, based on the IP address and the VLAN ID of the network device set, for the network device on which each ethernet subdevice is located.

S702: Generate network configuration information for network devices corresponding to all network device sets.

For example, S701 is repeated for different network device sets, to further generate the network configuration information for "each network device in the plurality of network devices".

It should be noted that one network device may include a plurality of ethernet subdevices, and the plurality of ethernet subdevices respectively belong to different network device sets. In this case, network configuration information generated for the plurality of ethernet subdevices based on the different network device sets constitutes network configuration information of the network device.

For example, the method 600 and the method 700 may be summarized as follows: The network configuration information is generated for each network device based on the connection relationship between the plurality of network devices and the basic configuration of each network device.

In embodiments of this application, a method for generating the network configuration information for the network device based on the ethernet subdevice and/or the ethernet port is mainly described by using an example. In some possible implementations, the network configuration information in embodiments of this application may further include configuration information related to the CAN port, the LVDS port, and the UART port. For example, the configuration information related to the CAN port, the LVDS port, and the UART port may be generated based on the connection relationship between the plurality of network devices provided in embodiments of this application. For example, LVDS ports that need to communicate with each other are determined based on the connection relationships between the plurality of network devices (for example, which LVDS ports need to communicate with each other may be determined based on "Connected port" properties of the LVDS ports), and then configuration information for communication through the LVDS ports is generated for the network devices. For another example, UART ports that need to communicate with each other are determined based on the connection relationships between the plurality of network devices (for example, which LVDS ports need to communicate with each other may be determined based on "Connected port" properties of the UART ports), and then configuration information for communication through the UART ports is generated for the network devices. For still another example, a network link that performs communication through a CAN port is determined based on the connection relationship between the plurality of network devices, and then configuration information for communication through the CAN port is generated for the network devices based on information such as a channel ID of the CAN port and a CAN communication forwarding filtering table.

In embodiments of this application, unless otherwise specified or there is a logic conflict, terms and/or descriptions between embodiments are consistent and may be mutually referenced, and technical features in different embodiments may be combined based on an internal logical relationship thereof, to form a new embodiment.

With reference to FIG. 1 to FIG. 7, the foregoing describes in detail the methods provided in embodiments of this application. With reference to FIG. 8 and FIG. 9, the following describes in detail apparatuses provided in embodiments of this application. It should be understood that descriptions of the apparatus embodiments correspond to the descriptions of the method embodiments. Therefore, for content that is not described in detail, refer to the foregoing method embodiments. For brevity, details are not described herein again.

FIG. 8 is a block diagram of a network configuration apparatus 800 according to an embodiment of this application. The apparatus 800 includes a first processing unit 810, an obtaining unit 820, and a generation unit 830.

The apparatus 800 may include a unit configured to perform the methods in FIG. 3, FIG. 6, and FIG. 7. **In** addition, the units in the apparatus 800 are separately used to implement corresponding procedures in the method embodiments in FIG. 3, FIG. 6, and FIG. 7.

When the apparatus 800 is configured to perform the method 300 in FIG. 3, the first processing unit 810 may be configured to perform S301 in the method 300, the obtaining unit 820 may be configured to perform S302 in the method 300, and the generation unit 830 may be configured to perform S303 in the method 300.

For example, the first processing unit 810 is configured to establish a connection relationship between a plurality of network devices according to a user instruction, where the plurality of network devices are vehicle-mounted network devices. The obtaining unit 820 is configured to obtain a basic configuration of each network device in the plurality of network devices, where the basic configuration of each network device includes address information of the network device. The generation unit 830 is configured to generate network configuration information for each network device based on the connection relationship between the plurality of network devices and the basic configuration of each network device.

Optionally, the apparatus further includes a second processing unit, configured to control a display apparatus to display a first interface, where the first interface includes the connection relationship between the plurality of network devices.

Optionally, the first interface includes a display area and a creation tool area. The creation tool area includes a plurality of network device objects of different types. The plurality of network device objects of different types are used to create the plurality of network devices. The display area is used to display the connection relationship between the plurality of network devices.

Optionally, the connection relationship between the plurality of network devices includes a type of a communication port of each network device in the plurality of network devices. The communication port is a port connected to another network device.

Optionally, the type of the communication port includes an ethernet port, a UART port, an LVDS port, or a CAN port.

Optionally, the apparatus further includes a determining unit, configured to determine a communication relationship between the plurality of network devices based on the type of the communication port of each network device in the plurality of network devices and the basic configuration of each network device. The generation unit 830 is configured to generate the network configuration information for each network device based on the communication relationship between the plurality of network devices.

Optionally, the basic configuration of each network device further includes a virtual local area network identifier VLAN ID of the network device. The determining unit is configured to determine the communication relationship between the plurality of network devices based on the type of the communication port of each network device in the plurality of network devices and the VLAN ID of each network device.

Optionally, the apparatus further includes a third processing unit, configured to in response to an operation on a first network device, control the display apparatus to display a second interface, where the first network device is any one of the plurality of network devices. The obtaining unit 820 is configured to obtain a basic configuration of the first network device via the second interface.

Optionally, the basic configuration of each network device further includes a data stream configuration. The data stream configuration indicates a constraint on a data stream generated when the network device provides a service. The constraint on the data stream includes one or more of a flow direction of the data stream, a transmission speed of the data stream, and a priority of the data stream. The apparatus further includes a fourth processing unit, configured to control the display apparatus to display a third interface, where the third interface includes one or more of a flow direction of a data stream between the plurality of network devices, a transmission speed of the data stream, and a priority of the data stream.

Optionally, the network configuration information includes one or more of an ACL, an ARL, an ARP table, and a routing table.

For example, the first processing unit 810 may be disposed in the connection relationship creation module 210 shown in FIG. 2, the obtaining unit 820 may be disposed in the basic configuration collection module 220 shown in FIG. 2, and the generation unit may be disposed in the network configuration generation module 230 shown in FIG. 2. For example, the second processing unit may be disposed in the connection relationship creation module 210 shown in FIG. 2, the third processing unit may be disposed in the basic configuration collection module 220 shown in FIG. 2, the fourth processing unit may be disposed in the connection relationship creation module 210, the determining unit may be disposed in the network configuration generation module 230.

It should be understood that division into the units in the foregoing apparatus is merely logical function division. During actual implementation, all or some of the units may be integrated into a physical entity, or may be physically separated. In addition, the units in the apparatus may be implemented in a form of invoking software by a processor. For example, the apparatus includes the processor. The processor is connected to a memory. The memory stores instructions. The processor invokes the instructions stored in the memory, to implement any one of the foregoing methods or implement a function of each unit of the apparatus. For example, the processor is a general-purpose processor, for example, a CPU or a microprocessor. The memory is a memory inside the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an application-specific integrated circuit (application-specific integrated circuit, ASIC), and the functions of some or all of the units are implemented by designing a logical relationship between elements in the circuit. For another example, in another implementation, the hardware circuit may be implemented by a programmable logic device (programmable logic device, PLD). A field programmable gate array (field programmable gate array, FPGA) is used as an example. The field programmable gate array may include a large quantity of logic gate circuits. A configuration file is used to configure a connection relationship between the logic gate circuits, to implement the functions of some or all of the units. All the units of the foregoing apparatus may be implemented in the form of invoking the software by the processor, or may be implemented in the form of the hardware circuit, or some of the units may be implemented in the form of invoking the software by the processor, and a remaining part may be implemented in the form of the hardware circuit.

In embodiments of this application, the processor is a circuit that has a signal processing capability. In an implementation, the processor may be a circuit that has an instruction reading and running capability, for example, a central processing unit (central processing unit, CPU), a microprocessor, a graphics processing unit (graphics processing unit, GPU) (which may be understood as a microprocessor), a digital signal processor (digital signal processor, DSP), or the like. In another implementation, the processor may implement a specific function by using a logical relationship of a hardware circuit. The logical relationship of the hardware circuit is fixed or reconfigurable. For example, the processor is a hardware circuit, for example, an FPGA, implemented by an ASIC or a PLD. In the reconfigurable hardware circuit, a process in which the processor loads a configuration document to implement configuration of the hardware circuit may be understood as a process in which the processor loads instructions to implement the functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

It can be learned that each unit in the foregoing apparatus may be one or more processors (or processing circuits) configured to implement the foregoing methods, for example, a CPU, a GPU, an NPU, a TPU, a DPU, a microprocessor, a DSP, an ASIC, an FPGA, or a combination of at least two of these processor forms.

In addition, all or some of the units in the foregoing apparatus may be integrated, or may be implemented independently. In an implementation, these units are integrated and implemented in a form of a SoC. The SoC may include at least one processor, configured to implement any one of the foregoing methods or implement functions of the units of the apparatus. Types of the at least one processor may be different, for example, the at least one processor includes a CPU and an FPGA, a CPU and an artificial intelligence processor, or a CPU and a GPU.

In a specific implementation process, operations performed by the first processing unit 810, the obtaining unit 820, and the generation unit 830 may be performed by a same processor, or may be performed by different processors, for example, separately performed by a plurality of processors. In addition, operations performed by the first processing unit 810, the obtaining unit 820, and the generation unit 830 and operations performed by the second processing unit, the third processing unit, the fourth processing unit, and the determining unit may be performed by a same processor, or may be performed by different processors. In a specific implementation process, the one or more processors may be a processor disposed in the development platform 200 shown in FIG. 2, or the apparatus 800 may be a chip disposed in an electronic device.

FIG. 9 is a block diagram of a network configuration apparatus according to an embodiment of this application. The network configuration apparatus 900 shown in FIG. 9 may include a processor 910, a transceiver 920, and a memory 930. The processor 910, the transceiver 920, and the memory 930 are connected through an internal connection path. The memory 930 is configured to store instructions. The processor 910 is configured to execute the instructions stored in the memory 930, for the transceiver 920 to receive/send some parameters. Optionally, the memory 930 may be coupled to the processor 910 through an interface, or may be integrated with the processor 910.

It should be noted that the transceiver 920 may include but is not limited to a transceiver apparatus like an input/output interface (input/output interface), to implement communication between the apparatus 900 and another device or a communication network.

The memory 930 may be a read-only memory (read-only memory, ROM), a static storage device, a dynamic storage device, or a random access memory (random access memory, RAM).

The transceiver 920 may be but is not limited to a transceiver apparatus, for example, a transceiver, to implement communication between the apparatus 900 and another device or a communication network.

In a specific implementation process, the apparatus 900 may be disposed in the development platform 200 shown in FIG. 2.

An embodiment of this application further provides an electronic device. The electronic device includes the apparatus 800 or the apparatus 900.

An embodiment of this application further provides a computer program product. The computer program product includes computer program code. When the computer program code is run on a computer, the computer is enabled to implement the methods in embodiments of this application.

An embodiment of this application further provides a computer-readable storage medium. The computer-readable storage medium stores computer instructions. When the computer instructions are run on a computer, the computer is enabled to implement the methods in embodiments of this application.

An embodiment of this application further provides a chip, including a circuit, configured to perform the methods in embodiments of this application.

In an implementation process, the steps in the foregoing methods may be implemented via a hardware integrated logical circuit in a processor or by using instructions in a form of software. The methods disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in a memory. The processor reads information in the memory, and completes the steps of the foregoing methods in combination with hardware of the processor. To avoid repetition, details are not described herein again.

A person of ordinary skill in the art may be aware that units and algorithm steps in the examples described with reference to embodiments disclosed in this specification can be implemented by electronic hardware or a combination of computer software and electronic hardware. Whether these functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a detailed working process of the foregoing system, apparatus, and unit, refer to a corresponding process in the foregoing method embodiment. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division, and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions in embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A network configuration method, comprising:
establishing a connection relationship between a plurality of network devices according to a user instruction, wherein the plurality of network devices are vehicle-mounted network devices;
obtaining a basic configuration of each network device in the plurality of network devices, wherein the basic configuration of each network device comprises address information of the network device; and
generating network configuration information for each network device based on the connection relationship between the plurality of network devices and the basic configuration of each network device.

2. The method according to claim 1, wherein the method further comprises:
controlling a display apparatus to display a first interface, wherein the first interface comprises the connection relationship between the plurality of network devices.

3. The method according to claim 2, wherein the first interface comprises a display area and a creation tool area, the creation tool area comprises a plurality of network device objects of different types, the plurality of network device objects of different types are used to create the plurality of network devices, and the display area is used to display the connection relationship between the plurality of network devices.

4. The method according to any one of claims 1 to 3, wherein the connection relationship between the plurality of network devices comprises a type of a communication port of each network device in the plurality of network devices, and the communication port is a port connected to another network device.

5. The method according to claim 4, wherein the type of the communication port comprises an ethernet ETH port, a universal asynchronous receiver/transmitter UART port, a low-voltage differential signaling LVDS port, or a controller area network CAN port.

6. The method according to claim 4 or 5, wherein the generating network configuration information for each network device based on the connection relationship between the plurality of network devices and the basic configuration of each network device comprises:
determining a communication relationship between the plurality of network devices based on the type of the communication port of each network device in the plurality of network devices and the basic configuration of each network device; and
generating the network configuration information for each network device based on the communication relationship between the plurality of network devices.

7. The method according to claim 6, wherein the basic configuration of each network device further comprises a virtual local area network identifier VLAN ID of the network device, and the determining a communication relationship between the plurality of network devices based on the type of the communication port of each network device in the plurality of network devices and the basic configuration of each network device comprises:
determining the communication relationship between the plurality of network devices based on the type of the communication port of each network device in the plurality of network devices and the VLAN ID of each network device.

8. The method according to any one of claims 1 to 7, wherein the obtaining a basic configuration of each network device in the plurality of network devices comprises:
in response to an operation on a first network device, controlling the display apparatus to display a second interface, and obtaining a basic configuration of the first network device via the second interface, wherein the first network device is any one of the plurality of network devices.

9. The method according to any one of claims 1 to 8, wherein the basic configuration of each network device further comprises a data stream configuration, the data stream configuration indicates a constraint on a data stream generated when the network device provides a service, the constraint on the data stream comprises one or more of a flow direction of the data stream, a transmission speed of the data stream, and a priority of the data stream, and the method further comprises:
controlling the display apparatus to display a third interface, wherein the third interface comprises one or more of a flow direction of a data stream between the plurality of network devices, a transmission speed of the data stream, and a priority of the data stream.

10. The method according to any one of claims 1 to 9, wherein the network configuration information comprises one or more of an access control list ACL, an address resolution list ARL, an address resolution protocol ARP, and a routing table.

11. A network configuration apparatus, comprising a first processing unit, an obtaining unit, and a generation unit, wherein
the first processing unit is configured to establish a connection relationship between a plurality of network devices according to a user instruction, wherein the plurality of network devices are vehicle-mounted network devices;
the obtaining unit is configured to obtain a basic configuration of each network device in the plurality of network devices, wherein the basic configuration of each network device comprises address information of the network device; and
the generation unit is configured to generate network configuration information for each network device based on the connection relationship between the plurality of network devices and the basic configuration of each network device.

12. The apparatus according to claim 11, wherein the apparatus further comprises a second processing unit, configured to:
control a display apparatus to display a first interface, wherein the first interface comprises the connection relationship between the plurality of network devices.

13. The apparatus according to claim 12, wherein the first interface comprises a display area and a creation tool area, the creation tool area comprises a plurality of network device objects of different types, the plurality of network device objects of different types are used to create the plurality of network devices, and the display area is used to display the connection relationship between the plurality of network devices.

14. The apparatus according to any one of claims 11 to 13, wherein the connection relationship between the plurality of network devices comprises a type of a communication port of each network device in the plurality of network devices, and the communication port is a port connected to another network device.

15. The apparatus according to claim 14, wherein the type of the communication port comprises an ethernet ETH port, a universal asynchronous receiver/transmitter UART port, a low-voltage differential signaling LVDS port, or a controller area network CAN port.

16. The apparatus according to claim 14 or 15, wherein the apparatus further comprises a determining unit, configured to:
determine a communication relationship between the plurality of network devices based on the type of the communication port of each network device in the plurality of network devices and the basic configuration of each network device; and
the generation unit is configured to generate the network configuration information for each network device based on the communication relationship between the plurality of network devices.

17. The apparatus according to claim 16, wherein the basic configuration of each network device further comprises a virtual local area network identifier VLAN ID of the network device, and the determining unit is configured to:
determine the communication relationship between the plurality of network devices based on the type of the communication port of each network device in the plurality of network devices and the VLAN ID of each network device.

18. The apparatus according to any one of claims 11 to 17, wherein the apparatus further comprises a third processing unit, configured to:
in response to an operation on a first network device, control the display apparatus to display a second interface, wherein the first network device is any one of the plurality of network devices; and
the obtaining unit is configured to obtain a basic configuration of the first network device via the second interface.

19. The apparatus according to any one of claims 11 to 18, wherein the basic configuration of each network device further comprises a data stream configuration, the data stream configuration indicates a constraint on a data stream generated when the network device provides a service, the constraint on the data stream comprises one or more of a flow direction of the data stream, a transmission speed of the data stream, and a priority of the data stream, and the apparatus further comprises a fourth processing unit, configured to:
control the display apparatus to display a third interface, wherein the third interface comprises one or more of a flow direction of a data stream between the plurality of network devices, a transmission speed of the data stream, and a priority of the data stream.

20. The apparatus according to any one of claims 11 to 19, wherein the network configuration information comprises one or more of an access control list ACL, an address resolution list ARL, an address resolution protocol ARP, and a routing table.

21. A network configuration apparatus, comprising:
a memory, configured to store a computer program; and
a processor, configured to execute the computer program stored in the memory, for the apparatus to perform the method according to any one of claims 1 to 10.

22. An electronic device, comprising the apparatus according to any one of claims 11 to 21.

23. A computer-readable storage medium, wherein the computer-readable storage medium stores instructions, and when the instructions are executed by a processor, the processor is enabled to implement the method according to any one of claims 1 to 10.

24. A chip, wherein the chip comprises a circuit, and the circuit is configured to perform the method according to any one of claims 1 to 10.

25. A computer program product, wherein the computer program product comprises computer program code, and when the computer program code is run on a computer, the computer is enabled to perform the method according to any one of claims 1 to 10.
